# EUROPEAN PATENT APPLICATION

(11) **EP 4 797 816 A1**
(43) Date of publication of application: **26.08.2026**
(21) Application number: 26159528.4
(22) Date of filing: 19.02.2026
(51) Int. Cl.: H04W 52/02

(54) **SIGNALING DYNAMIC POWER SAVE OPERATION**

(30) Priority: 21.02.2025 US 202563761714 P; 17.02.2026 US 202619542495
(71) Applicant: Apple Inc., Cupertino, CA 95014 (US)
(72) Inventor: GHOSH, Chittabrata, Cupertino, CA, 95014 (US); BATRA, Anuj, Cupertino, CA, 95014 (US); AJAMI, Abdel Karim, Cupertino, CA, 95014 (US); LIU, Yong, Cupertino, CA, 95014 (US)
(74) Representative: Heckeler, Patrick

(57) **Abstract**

This disclosure relates to methods for a dynamic power save (DPS) operation in a wireless local area network system. A wireless device can transmit, to another wireless device, a management frame including at least a first field indicating enablement of DPS mode operation, receive, from the other wireless device, an acknowledgment frame and transition, based, at least in part, on reception of the acknowledgement frame, into an LC mode of the DPS mode of operation. The management frame can further include a DPS operation parameters field. The DPS operation parameters field can include subfields specifying DPS operation.

## Description

### TECHNICAL FIELD

The present application relates to wireless communication, including techniques and devices for signaling a dynamic power save operation in a wireless local area network system, e.g., such as an IEEE 802.11 based system.

### DESCRIPTION OF THE RELATED ART

Wireless communication systems are ubiquitous. Further, wireless communication technology has evolved from voice-only communications to also include the transmission of data, such as Internet and multimedia content.

Mobile electronic devices, or stations (STAs) or user equipment devices (UEs), can take the form of smart phones or tablets that a user typically carries. One aspect of wireless communication that can commonly be performed by mobile devices can include wireless networking, for example over a wireless local area network (WLAN), which can include devices that operate according to one or more communication standards in the IEEE 802.11 family of standards. In a wireless local area network, it can be possible that certain traffic can be delayed while other communications in the network are being performed. This can potentially cause performance degradation for traffic for which low latency is important, at least in some instances. Accordingly, improvements in the field are desired.

### SUMMARY

Embodiments are presented herein of, *inter alia*, systems, apparatuses, and methods for devices to signal a dynamic power save (DPS) operation in a wireless local area network system, e.g., such as an IEEE 802.11 based system.

A wireless device can include one or more antennas, one or more radios operably coupled to the one or more antennas, and a processor operably coupled to the one or more radios. The wireless device can be configured to establish a connection with an access point through a wireless local area network (WLAN) over one or multiple wireless links or can be an access point configured to establish a connection with one or more other wireless devices through a WLAN over one or multiple wireless links. In some embodiments, the wireless device can operate in each of the multiple wireless links using a respective radio of the one or more radios.

For example, in some embodiments, a wireless device can transmit, to another wireless device, a management frame including at least a first field indicating enablement of DPS mode operation, receive, from the other wireless device, an acknowledgment frame and transition, based, at least in part, on reception of the acknowledgement frame, into an LC mode of the DPS mode of operation. The management frame can further include a DPS operation parameters field. The DPS operation parameters field can include subfields specifying DPS operation. For example, the subfields can indicate one or more links for which DPS mode operation is enabled, whether a value for a padding delay and a value for a transition delay are being updated via the management frame, the value for the padding delay, the value for the transition delay, whether an exchange of an initial control frame (ICF) and initial response (ICR) is required for all frame exchanges or only frame exchanges using higher capability (HC) mode parameters of the DPS mode of operation, a maximum bandwidth supported in the LC mode of the DPS mode of operation, a maximum number of spatial streams supported in the LC mode of the DPS mode of operation, a maximum modulation and coding scheme supported in the LC mode of the DPS mode of operation, and/or a physical layer protocol date unit (PPDU) format supported for transmit and receive operations in the LC mode of the DPS mode of operation.

The techniques described herein can be implemented in and/or used with a number of different types of devices, including but not limited to cellular phones, tablet computers, accessory and/or wearable computing devices, portable media players, base stations, access points, and other network infrastructure equipment, servers, unmanned aerial vehicles, unmanned aerial controllers, automobiles and/or motorized vehicles, and any of various other computing devices.

This summary is intended to provide a brief overview of some of the subject matter described in this document. Accordingly, it will be appreciated that the above-described features are merely examples and should not be construed to narrow the scope or spirit of the subject matter described herein in any way. Other features, aspects, and advantages of the subject matter described herein will become apparent from the following Detailed Description, Figures, and Claims.

### BRIEF DESCRIPTION OF THE DRAWINGS

A better understanding of the present subject matter can be obtained when the following detailed description of the embodiments is considered in conjunction with the following drawings.
Figure 1 illustrates an example wireless communication system including a wireless device, according to some embodiments.
Figure 2 is a block diagram illustrating an example wireless device, according to some embodiments.
Figure 3 is a block diagram illustrating an example network element or access point, according to some embodiments.
Figure 4 is a block diagram illustrating an example modem or baseband processor, according to some embodiments.
Figure 5 illustrates an example of DPS operation.
Figures 6, 7, 8, 9, and 10 illustrate examples of frame and field structures, according to some embodiments.
Figure 11 is a flowchart diagram illustrating an example method for dynamic power save (DPS) mode operation, according to some embodiments.

While the features described herein are susceptible to various modifications and alternative forms, specific embodiments thereof are shown by way of example in the drawings and are herein described in detail. It should be understood, however, that the drawings and detailed description thereto are not intended to be limiting to the particular form disclosed, but on the contrary, the intention is to cover all modifications, equivalents and alternatives falling within the spirit and scope of the subject matter as defined by the appended claims.

### DETAILED DESCRIPTION

### Terminology

The following are definitions of terms used in this disclosure:
**Memory Medium** - Any of various types of non-transitory memory devices or storage devices. The term "memory medium" is intended to include any computer system memory or random access memory, such as DRAM, DDR RAM, SRAM, EDO RAM, Rambus RAM, etc.; a non-volatile memory such as a Flash, magnetic media, e.g., a hard drive, or optical storage; registers, or other similar types of memory elements, etc. The term "memory medium" can include two or more memory mediums which can reside in different locations, e.g., in different computer systems that are connected over a network. The memory medium can store program instructions (e.g., embodied as computer programs) that can be executed by one or more processors.

**Carrier Medium** - a memory medium as described above, as well as a physical transmission medium, such as a bus, network, and/or other physical transmission medium that conveys signals such as electrical, electromagnetic, or digital signals.

**Computer System** - any of various types of computing or processing systems, including a personal computer system (PC), server-based computer system, wearable computer, network appliance, Internet appliance, smartphone, television system, grid computing system, or other device or combinations of devices. In general, the term "computer system" can be broadly defined to encompass any device (or combination of devices) having at least one processor that executes instructions from a memory medium.

**User Equipment (UE) (or "UE Device")** - any of various types of computer systems or devices that are mobile or portable, and that perform wireless communications. Examples of UE devices include mobile telephones or smart phones (e.g., iPhone^{™}, Android^{™}-based phones), tablet computers, portable gaming devices, laptops, wearable devices (e.g., smart watch, smart glasses, smart goggles, head-mounted display devices, and so forth), portable Internet devices, music players, data storage devices, or other handheld devices, automobiles and/or motor vehicles, unmanned aerial vehicles (UAVs) (e.g., drones), UAV controllers (UACs), etc. In general, the term "UE" or "UE device" can be broadly defined to encompass any electronic, computing, and/or telecommunications device (or combination of devices) which is easily transported by a user and capable of wireless communication.

**Wireless Device or Station (STA)** - any of various types of computer systems or devices that perform wireless communications. A wireless device can be portable (or mobile) or can be stationary or fixed at a certain location. The terms "station" and "STA" are used similarly. A UE is an example of a wireless device.

**Communication Device** - any of various types of computer systems or devices that perform communications, where the communications can be wired or wireless. A communication device can be portable (or mobile) or can be stationary or fixed at a certain location. A wireless device is an example of a communication device. A UE is another example of a communication device.

**Base Station or Access Point (AP)** - The term "Base Station" has the full breadth of its ordinary meaning, and at least includes a wireless communication station installed at a fixed location and used to communicate as part of a wireless communication system. The term "access point" (or "AP") is typically associated with Wi-Fi-based communications and is used similarly.

**Processing Element (or Processor)** - refers to various elements or combinations of elements that are capable of performing a function in a device, e.g., in a communication device or in a network infrastructure device. Processors can include, for example: processors and associated memory, circuits such as an ASIC (Application Specific Integrated Circuit), portions or circuits of individual processor cores, entire processor cores, processor arrays, programmable hardware devices such as a field programmable gate array (FPGA), and/or larger portions of systems that include multiple processors, as well any of various combinations of the above.

**IEEE 802.11** - refers to technology based on IEEE 802.11 wireless standards such as 802.11a, 802.11b, 802.11g, 802.11n, 802.11-2012, 802.11ac, 802.11ad, 802.11ax, 802.11ay, 802.11be, and/or other IEEE 802.11 standards. IEEE 802.11 technology can also be referred to as "Wi-Fi" or "wireless local area network (WLAN)" technology.

**Configured to** - Various components can be described as "configured to" perform a task or tasks. In such contexts, "configured to" is a broad recitation generally meaning "having structure that" performs the task or tasks during operation. As such, the component can be configured to perform the task even when the component is not currently performing that task (e.g., a set of electrical conductors can be configured to electrically connect a module to another module, even when the two modules are not connected). In some contexts, "configured to" can be a broad recitation of structure generally meaning "having circuitry that" performs the task or tasks during operation. As such, the component can be configured to perform the task even when the component is not currently on. In general, the circuitry that forms the structure corresponding to "configured to" can include hardware circuits.

Various components can be described as performing a task or tasks, for convenience in the description. Such descriptions should be interpreted as including the phrase "configured to." Reciting a component that is configured to perform one or more tasks is expressly intended not to invoke 35 U.S.C. § 112(f) interpretation for that component.

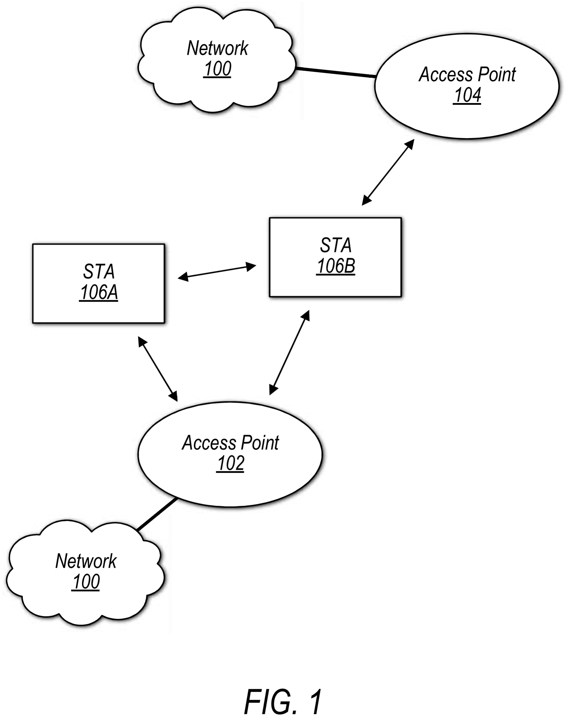

### Figures 1-2 - Wireless Communication System

Figure 1 illustrates an example of a wireless communication system. It is noted that Figure 1 represents one possibility among many, and that features of the present disclosure can be implemented in any of various systems, as desired. For example, instances described herein can be implemented in any type of wireless device. The wireless communication system described below is one example.

As shown, the exemplary wireless communication system includes an access point (AP) 102, which communicates over a transmission medium with one or more wireless devices 106A, 106B, etc. Wireless devices 106A and 106B can be user devices, such as stations (STAs), non-AP STAs, UEs, or other WLAN devices.

The STA 106 can be a device with wireless network connectivity, such as a mobile phone, a hand-held device, a wearable device (e.g., such as a smart watch, smart glasses, and/or a head-mounted display device), a computer or a tablet, an unmanned aerial vehicle (UAV), an unmanned aerial controller (UAC), an automobile, or virtually any other type of wireless device. The STA 106 can include a processor (processing element) that is configured to execute program instructions stored in memory. The STA 106 can perform any of the methods described herein by executing one or more of such stored instructions. Alternatively, or in addition, the STA 106 can include a programmable hardware element, such as an FPGA (field-programmable gate array), an integrated circuit (e.g., an ASIC), a programmable logic device (PLD), and/or any of various other possible hardware components that are configured to perform (e.g., individually or in combination) any of the methods described herein, or any portion of any of the methods described herein.

The AP 102 can be a stand-alone AP or an enterprise AP, can be a base transceiver station (BTS) or cell site, and can include hardware that enables wireless communication with the STA devices 106A and 106B. The AP 102 can also be equipped to communicate with a network 100 (e.g., a core network of a service provider (e.g., a cellular service provider, an Internet service provider, and/or a carrier), a WLAN, an enterprise network, and/or another communication network connected to the Internet, among various possibilities). Thus, the AP 102 can facilitate communication among the STA devices 106 and/or between the STA devices 106 and the network 100. AP 102 can be configured to provide communications over one or more wireless technologies, such as any, any combination of, and/or all of 802.11 a, b, g, n, ac, ad, ax, ay, be and/or other 802.11 versions, and/or a cellular protocol, such as 6G, 5G and/or LTE, including in an unlicensed band.

The communication area (or coverage area) of the AP 102 can be referred to as a basic service area (BSA) or cell. The AP 102 and the STAs 106 can be configured to communicate over the transmission medium using any of various radio access technologies (RATs) or wireless communication technologies, such as Wi-Fi, LTE, LTE-Advanced (LTE-A), 5G NR, 6G, ultra-wideband (UWB), etc.

AP 102 and other similar access points (not shown) operating according to one or more wireless communication technologies can thus be provided as a network, which can provide continuous or nearly continuous overlapping service to STA devices 106A-B and similar devices over a geographic area, e.g., via one or more communication technologies. A STA can roam from one AP to another AP directly or can transition between APs and/or network cells (e.g., such as cellular network cells).

Note that at least in some instances a STA device 106 can be capable of communicating using any of multiple wireless communication technologies. For example, a STA device 106 might be configured to communicate using Wi-Fi, LTE, LTE-A, 5G NR, 6G, Bluetooth, UWB, one or more satellite systems, etc. Other combinations of wireless communication technologies (including more than two wireless communication technologies) are also possible. Likewise, in some instances a STA device 106 can be configured to communicate using only a single wireless communication technology.

As shown, the exemplary wireless communication system can also include an access point (AP) 104, which communicates over a transmission medium with the wireless device 106B. The AP 104 also provides communicative connectivity to the network 100. Thus, wireless devices can connect to either or both of AP 102 (or another cellular base station) and the access point 104 (or another access point) to access the network 100. For example, a STA can roam from AP 102 to AP 104, e.g., based on one or more factors, such as mobility, coverage, interference, and/or capabilities. Note that it can also be possible for the AP 104 to provide access to a different network (e.g., an enterprise Wi-Fi network, a home Wi-Fi network, etc.) than the network to which the AP 102 provides access.

The STAs 106A and 106B can include handheld devices such as smart phones or tablets, wearable devices such as smart watches, smart glasses, head-mountable display devices, and/or can include any of various types of devices with wireless communication capability. For example, one or more of the STAs 106A and/or 106B can be a wireless device intended for stationary or nomadic deployment, such as an appliance, measurement device/sensor, control device, etc.

The STA 106B can also be configured to communicate with the STA 106A. For example, the STA 106A and STA 106B can be capable of performing direct device-to-device (D2D) communication. Note that such direct communication between STAs can also or alternatively be referred to as peer-to-peer (P2P) communication. The direct communication can be supported by the AP 102 (e.g., the AP 102 can facilitate discovery, among various possible forms of assistance), or can be performed in a manner unsupported by the AP 102. Such P2P communication can be performed using 3GPP-based D2D communication techniques, Wi-Fi-based P2P communication techniques, UWB, BT, and/or any of various other direct communication techniques, according to various examples.

The STA 106 can include one or more devices or integrated circuits for facilitating wireless communication, potentially including a Wi-Fi modem, cellular modem, and/or one or more other wireless modems. The wireless modem(s) can include one or more processors (processor elements) and various hardware components as described herein. The STA 106 can perform any of (or any portion of) the methods described herein by executing instructions on one or more programmable processors. For example, the STA 106 can be configured to perform techniques for an enhanced BSR in a wireless communication system, such as according to the various methods described herein. Alternatively, or in addition, the one or more processors can be one or more programmable hardware elements such as an FPGA (field-programmable gate array), application-specific integrated circuit (ASIC), or other circuitry, that is configured to perform any of the methods described herein, or any portion of any of the methods described herein. The wireless modem(s) described herein can be used in a STA device as defined herein, a wireless device as defined herein, or a communication device as defined herein. The wireless modem described herein can also be used in an AP, a base station, a pico cell, a femto cell, and/or other similar network side device.

The STA 106 can include one or more antennas for communicating using two or more wireless communication protocols or radio access technologies (RATs). In some instances, the STA device 106 can be configured to communicate using a single shared radio. The shared radio can couple to a single antenna, or can couple to multiple antennas (e.g., for MIMO) for performing wireless communications. Alternatively, the STA device 106 can include two or more radios, each of which can be configured to communicate via a respective wireless link. Other configurations are also possible.

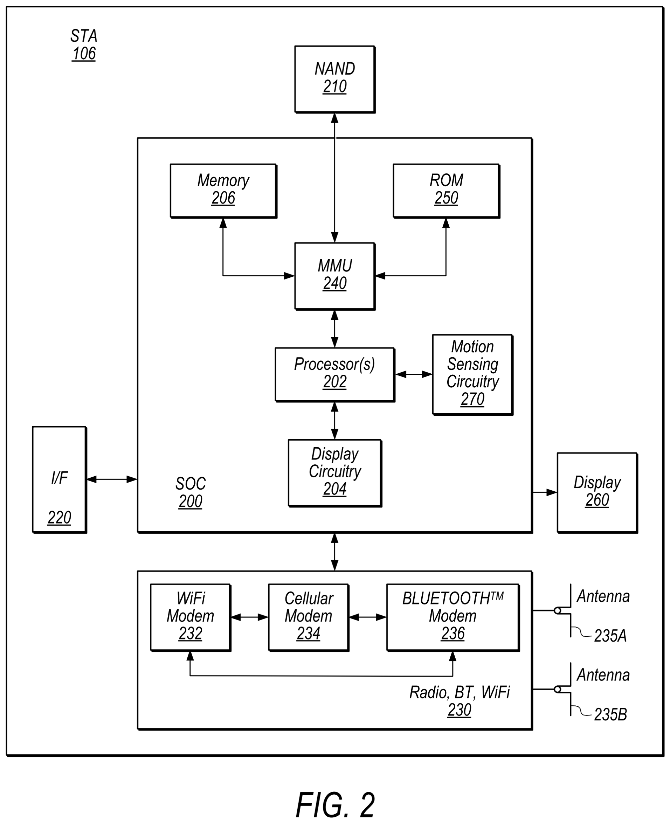

### Figure 2 - Example Block Diagram of a STA Device

Figure 2 illustrates an example block diagram of a STA device, such as STA 106. In some instances, the STA 106 can additionally or alternatively be referred to as a UE 106. STA 106 also can be referred to as a non-AP STA 106. As shown, the STA 106 can include a system on chip (SOC) 200, which can include one or more portions configured for various purposes. Some or all of the various illustrated components (and/or other device components not illustrated, e.g., in variations and alternative arrangements) can be "communicatively coupled" or "operatively coupled," which terms can be taken herein to mean components that can communicate, directly or indirectly, when the device is in operation.

In some instances, the STA 106 can be configured as a Multi-Link Device (MLD). In such instances, the STA 106 (e.g., one or more radios of the STA 106) can be configured for concurrent data transmission and reception in multiple channels across a single band and/or multiple frequency bands (e.g., such as a 2.4 GHz band, a 5 GHz band, and/or a 6 GHz band). As such, the STA 106 (e.g., one or more radios of the STA 106) can be configured to perform Multi-Link Operation (MLO). For example, the STA 106 (e.g., one or more radios of the STA 106) can be configured to perform Simultaneous Transmit Receive (STR) operation (e.g., can be configured for simultaneous uplink and downlink traffic on a pair of links) and/or Enhanced Multi-Link Single-Radio (EMLSR) operation (e.g., can be configured such that a single-radio is used to listen to two or more links simultaneously).

As shown, the SOC 200 can include processor(s) 202, which can execute program instructions for the STA 106, and display circuitry 204, which can perform graphics processing and provide display signals to the display 260. The SOC 200 can also include motion sensing circuitry 270, which can detect motion of the STA 106 in one or more dimensions, for example using a gyroscope, accelerometer, and/or any of various other motion sensing components. The processor(s) 202 can also be coupled to memory management unit (MMU) 240, which can be configured to receive addresses from the processor(s) 202 and translate those addresses to locations in memory (e.g., memory 206, read only memory (ROM) 250, flash memory 210). The MMU 240 can be configured to perform memory protection and page table translation or set up. In some instances, the MMU 240 can be included as a portion of the processor(s) 202.

As shown, the SOC 200 can be coupled to various other circuits of the STA 106. For example, the STA 106 can include various types of memory (e.g., including NAND flash 210), a connector interface 220 (e.g., for coupling to a computer system, dock, charging station, etc.), the display 260, and wireless communication circuitry 230 (e.g., for LTE, LTE-A, 5G NR, 6G, Bluetooth, Wi-Fi, NFC, GPS, UWB, peer-to-peer (P2P), device-to-device (D2D), etc.).

The STA 106 can include at least one antenna, and in some instances can include multiple antennas, e.g., 235A and 235B, for performing wireless communication with access points, base stations, wireless stations, and/or other devices. For example, the STA 106 can use antennas 235A and 235B to perform the wireless communication. As noted above, the STA 106 can, in some examples, be configured to communicate wirelessly using a plurality of wireless communication standards or radio access technologies (RATs).

The wireless communication circuitry 230 can include a Wi-Fi modem 232, a cellular modem 234, and a Bluetooth modem 236. Note that one or more of the Wi-Fi modem 232, the cellular modem 234, and/or the Bluetooth modem 236 can be configured for MLO, e.g., as described above. The Wi-Fi modem 232 is for enabling the STA 106 to perform Wi-Fi or other WLAN communications, e.g., on an 802.11 network. The Bluetooth modem 236 is for enabling the STA 106 to perform Bluetooth communications. The cellular modem 234 can be capable of performing cellular communication according to one or more cellular communication technologies, e.g., in accordance with one or more 3GPP specifications.

As described herein, STA 106 can include hardware and software components for implementing aspects of this disclosure. For example, one or more components of the wireless communication circuitry 230 (e.g., Wi-Fi modem 232, cellular modem 234, BT modem 236) of the STA 106 can be configured to implement part or all of the methods for an enhanced BSR in a wireless local area network system described herein, e.g., by a processor executing program instructions stored on a memory medium (e.g., a non-transitory computer-readable memory medium), a processor configured as an FPGA (Field Programmable Gate Array), and/or using dedicated hardware components, which can include an ASIC (Application Specific Integrated Circuit).

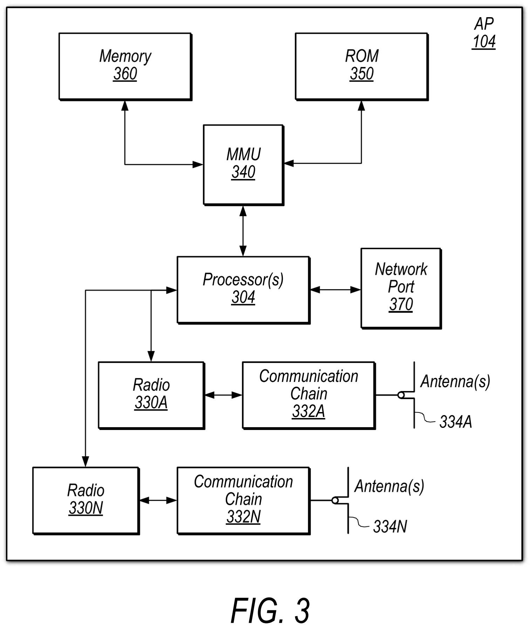

### Figure 3 - Block Diagram of an Access Point

Figure 3 illustrates an example block diagram of an access point (AP) 104. In some instances (e.g., in an 802.11 communication context), the AP 104 can also be referred to as a station (STA), and possibly more particularly as an AP STA. It is noted that the AP of Figure 3 is merely one example of a possible access point. As shown, AP 104 can include processor(s) 304, which can execute program instructions for the AP 104. The processor(s) 304 can also be coupled to memory management unit (MMU) 340, which can be configured to receive addresses from the processor(s) 304 and translate those addresses to locations in memory (e.g., memory 360 and read only memory (ROM) 350) or to other circuits or devices.

In some instances, the AP 104 can be configured as a Multi-Link Device (MLD). In such instances, the AP 104 (e.g., one or more radios of the AP 104) can be configured for concurrent data transmission and reception in multiple channels across a single band and/or multiple frequency bands (e.g., such as a 2.4 GHz band, a 5 GHz band, and/or a 6 GHz band). As such, the AP 104 (e.g., one or more radios of the AP 104) can be configured to perform Multi-Link Operation (MLO). For example, the AP 104 (e.g., one or more radios of the AP 104) can be configured to perform Simultaneous Transmit Receive (STR) operation (e.g., can be configured for simultaneous uplink and downlink traffic on a pair of links) and/or Enhanced Multi-Link Single-Radio (EMLSR) operation (e.g., can be configured such that a single-radio is used to listen to two or more links simultaneously).

The AP 104 can include at least one network port 370. The network port 370 can be configured to couple to a network and provide multiple devices, such as STA devices 106, with access to the network, for example as described herein above in Figure 1.

The network port 370 (or an additional network port) can also or alternatively be configured to couple to a cellular network, e.g., a core network of a cellular service provider (e.g., a carrier and/or cellular carrier). The core network can provide mobility related services and/or other services to a plurality of devices, such as STA devices 106. In some cases, the network port 370 can couple to a telephone network via the core network, and/or the core network can provide a telephone network (e.g., among other STA devices serviced by the cellular service provider).

The AP 104 can include one or more radios 330A-330N, which can be coupled to one or more respective communication chains and at least one antenna 334, and possibly multiple antennas. The antenna(s) 334 can be configured to operate, in conjunction with one or more other components, as a wireless transceiver and can be further configured to communicate with STA devices 106 via radios 330A-330N. Note that one or more of the radios 330A-330N can be configured for MLO, e.g., as described above. The antenna(s) 334A-N communicate with one or more respective radios 330A-N via communication chains 332A-N. Communication chains 332 can be receive chains, transmit chains, or both. The radios 330A-N can be configured to communicate in accordance with various wireless communication standards, including, but not limited to, LTE, LTE-A, 5G NR, 6G, UWB, Wi-Fi, BT, etc. The AP 104 can be configured to operate on multiple wireless links using the one or more radios 330A-N. In some implementations, each radio can be used to operate on a respective wireless link.

The AP 104 can be configured to communicate wirelessly using multiple wireless communication standards. In some instances, the AP 104 can include multiple radios, which can enable the network entity to communicate according to multiple wireless communication technologies. For example, as one possibility, the AP 104 can include a 4G or 5G radio for performing communication according to a 3GPP wireless communication technology, as well as a Wi-Fi radio for performing communication according to one or more Wi-Fi specifications. In such a case, the AP 104 can be capable of operating as both a cellular base station and a Wi-Fi access point. As another possibility, the AP 104 can include a multi-mode radio that is capable of performing communications according to any of multiple wireless communication technologies (e.g., 5G NR and Wi-Fi, 5G NR and LTE, etc.). As still another possibility, the AP 104 can be configured to act exclusively as a Wi-Fi access point, e.g., without cellular communication capability.

As described further herein, the AP 104 can include hardware and software components for implementing or supporting implementation of features described herein, among various other possible features. The processor 304 of the AP 104 can be configured to implement, or support implementation of, part or all of the methods described herein, e.g., by executing program instructions stored on a memory medium (e.g., a non-transitory computer-readable memory medium) to operate multiple wireless links using multiple respective radios. Alternatively, the processor 304 can be configured as a programmable hardware element, such as an FPGA (Field Programmable Gate Array) or ASIC (Application Specific Integrated Circuit), or a combination thereof. Alternatively (or in addition) the processor 304 of the AP 104, in conjunction with one or more of the other components 330, 332, 334, 340, 350, 360, 370 can be configured to implement, or support implementation of, part or all of the features described herein.

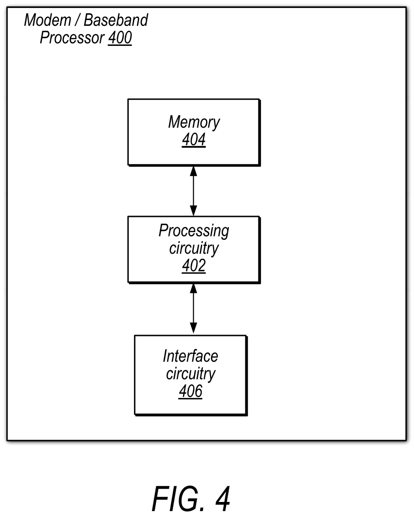

### Figure 4 - Block Diagram of a Modem or Baseband Processor

Figure 4 illustrates an example block diagram of a modem 400, which can also be referred to as baseband processor 400. The modem 400 can provide signal processing functionality for one or more wireless communication technologies, such as Wi-Fi, Bluetooth, and/or a cellular (e.g., 3GPP) communication technology. Thus, as one possibility, modem 400 can represent a Wi-Fi modem; for example, the modem 400 illustrated in Figure 4 can represent one possible example of Wi-Fi modem 232 illustrated in Figure 2. As another possibility, modem 400 can represent a cellular modem or cellular baseband processor; for example, the modem 400 illustrated in Figure 4 can represent one possible example of cellular modem 234 illustrated in Figure 2. As a still further possibility, modem 400 can represent a Bluetooth modem; for example, the modem 400 illustrated in Figure 4 can represent one possible example of Wi-Fi modem 236 illustrated in Figure 2. In some instances, the modem 400 could implement functionality for supporting communication according to multiple wireless communication technologies. At least in some instances, the modem 400 can run a real-time operating system, e.g., for facilitating performance of timing-dependent wireless communication functionality.

In some instances, the modem 400 can be configured for concurrent data transmission and reception in multiple channels across a single band and/or multiple frequency bands (e.g., such as a 2.4 GHz band, a 5 GHz band, and/or a 6 GHz band). As such, the modem 400 can be configured to perform Multi-Link Operation (MLO). For example, the modem 400 can be configured to perform Simultaneous Transmit Receive (STR) operation (e.g., can be configured for simultaneous uplink and downlink traffic on a pair of links) and/or Enhanced Multi-Link Single-Radio (EMLSR) operation (e.g., can be configured such that a single-radio is used to listen to two or more links simultaneously).

The modem 400 can include processing circuitry 402, which could include one or more processor cores, ASICs, programmable hardware elements, digital signal processors, and/or other processing elements. The processing circuitry can be capable of preparing baseband signals for up-conversion and transmission by radio circuitry of a wireless device, and/or for processing baseband signals received and down-converted by radio circuitry of a wireless device. Such processing could include signal modulation, encoding, decoding, etc., among various possible functions. The processing circuitry can also or alternatively be capable of performing functionality for one or more baseband and/or other layers/sublayers of a protocol stack for the wireless communication technology (or technologies) implemented by the modem 400, such as physical layer (PHY) functionality, media access control (MAC) functionality, logical link control (LLC) functionality, radio resource control (RRC) functionality, radio link control (RLC) functionality, etc. In some instances, the modem 400 can itself include at least some radio circuitry (e.g., for performing the conversion of input baseband signals to radio frequency signals and/or of input radio frequency signals to baseband signals). Alternatively, or in addition, some or all such functions can be performed by separate radio/transceiver components of the wireless device.

The modem 400 can also include memory 404, which can include a non-transitory computer-readable memory medium. The memory 404 can include program instructions for performing signal processing and/or any of various possible general processing functions. The processing circuitry 402 can be capable of executing the program instructions stored in the memory 404. The memory 404 can also store data generated and/or used during processing performed by the processing circuitry 402.

As shown, the modem 400 can further include interface circuitry, e.g., for communicating with other components of a wireless device (such as STA 106 or AP 104 illustrated in Figures 1-3), such as an application processor, radio / transceiver circuitry, and/or any of various other components. Such interfaces can be implemented in any of various ways; for example, as one possibility, the modem 400 can have a direct interface with transceiver circuitry of a wireless device and can have an additional indirect interface with an application processor and/or other components of the wireless device by way of a system bus. Other configurations are also possible.

In at least some instances, the hardware and software components of the modem 400 can be configured to implement or support implementation of features described herein, among various other possible features. For example, the processing circuitry 402 of the modem 400 can be configured to implement, or support implementation of, part or all of the methods described herein, e.g., by executing program instructions stored on memory (e.g., non-transitory computer-readable memory medium) 404 and/or using dedicated hardware components.

### Signaling a Dynamic Power Save Operation

In current implementations, in a dynamic power save (DPS) mode of operation, a wireless station, e.g., an ultra-high reliability (UHR) wireless station can remain in a lower capability mode and listen for an initial control frame (ICF). Then, upon reception of the ICF, e.g., from an access point and/or another wireless station (e.g., a peer station), the wireless station can transition to a higher capability mode of operation and remain in the higher capability mode of operation for a remaining duration of a transmit opportunity. Note that in the lower capability mode of operation, the wireless station can listen to a medium using a lower bandwidth (e.g., as compared to the higher capability mode of operation) to conserve power.

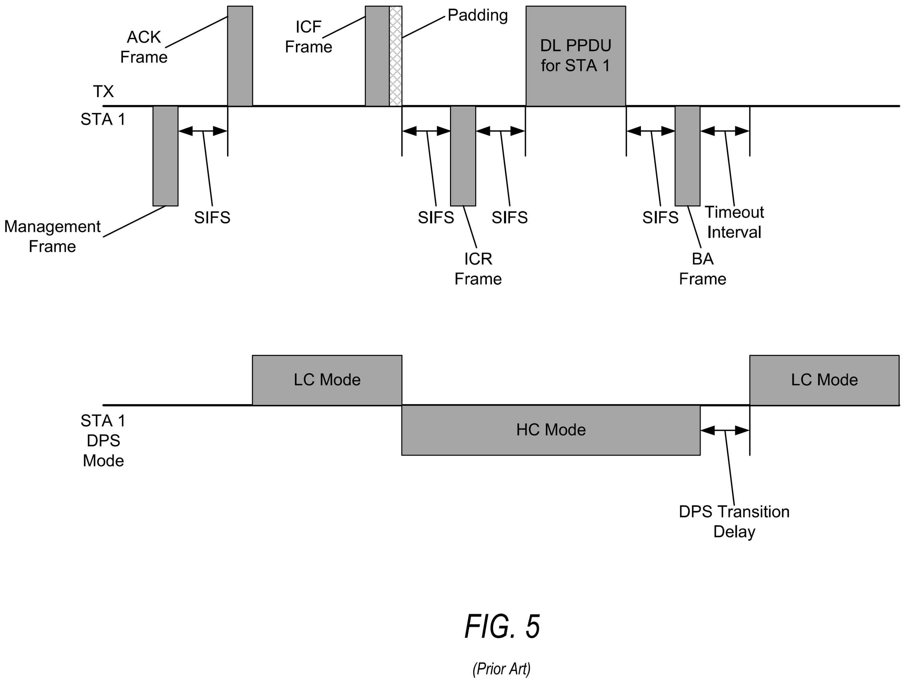

Figure 5 illustrates an example of DPS operation. As shown, a wireless station, e.g. STA 1, can send a management frame to a transmitting device (TX) (e.g., another wireless station and/or an access point (AP)) to enable/disable DPS as well as to provide DPS operational parameters. After a short inter-frame space (SIFS) after receipt of the management frame, the transmitting device can send an acknowledgement (ACK) frame responsive to the management frame. Upon receipt of the acknowledgement frame, the wireless station can enter a lower capability (LC) mode and listen for an ICF on a lower bandwidth. Note that upon receipt of the management frame from the wireless station, the other station may send a management frame to the wireless station. The other station accepts the request from the request of enabling or disabling DPS mode of operation but may accept or modify the parameters included in the first management frame from the wireless station. Then, when the transmitting device has data intended for the wireless station, the transmitting device can transmit the ICF. Note that the ICF can be transmitted in a non-high throughput (HT) physical layer protocol data unit (PPDU) at a rate of 6 megabits per second (Mbps), 12 Mbps, or 24 Mbps. The ICF can also carry, if requested by the wireless station in the management frame, an intermediate frame check sum (FCS). The ICF can include DPS padding if required by the wireless station (e.g., indicated in the management frame). Upon receiving the ICF, the wireless station can transition to a higher capability (HC) mode of operation. In addition, the wireless station, after a SIFS, can respond with an inter control response (ICR) frame. Further, a SIFS after the ICR frame, the transmitting device can transmit the data via a downlink (DL) PPDU. At the end of the DL PPDU, the wireless station can send a block acknowledgement after waiting a SIFS. Further, after a timeout interval, the wireless station can transition back to the LC mode, e.g., during a DPS transition delay. Note that the timeout interval can be a function of a SIFS time, a slot time, and receiver's physical start delay. Although the basic framework for DPS operation has been agreed upon, management level signaling details have not been specified. Therefore, improvements are desired.

Embodiments described herein provide signaling for a dynamic power save (DPS) operation. In particular, embodiments described herein provide methods and mechanisms for management level signaling for dynamic power save (DPS) operation, including frame formats for DPS enablement and field formats for DPS operation specification. For example, embodiments described herein provide a format for an action field in a UHR mode enablement notification frame for DPS operation as well as a format of a DPS operation parameters field.

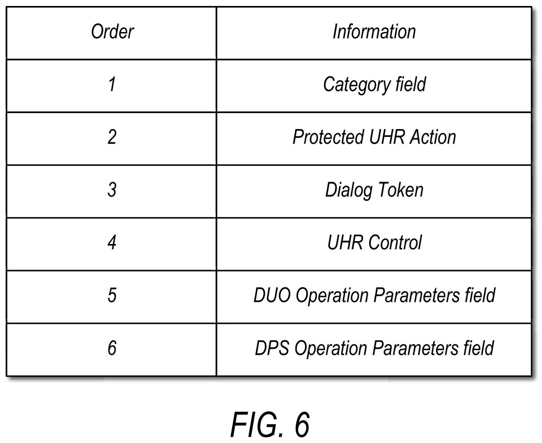

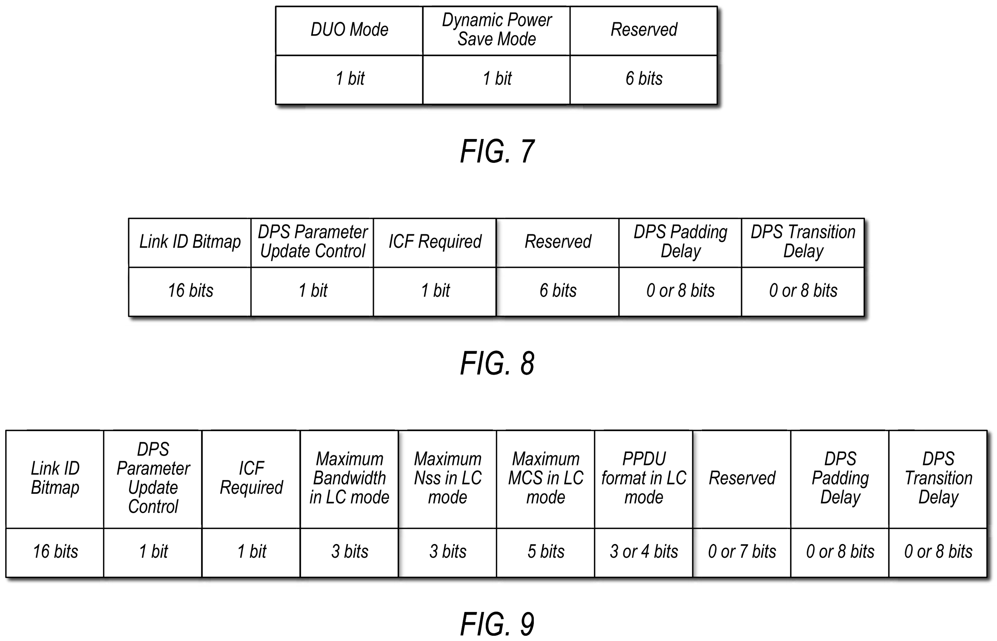

For example, Figures 6, 7, 8, 9, and 10 illustrate examples of frame and field structures, according to some embodiments. In particular, Figure 6 illustrates a UHR mode enablement notification frame, according to some embodiments. Note that a UHR mode enablement notification frame can be used to indicate that a wireless station, such as wireless station 106, e.g., affiliated to a non-access point (non-AP) multi-link device (MLD), is changing its UHR operation. An action field of the UHR mode enablement notification frame can include and/or contain a category field, a protected UHR action field, a dialog token field, a UHR control field, a dynamic unavailability operation (DUO) operation parameters field, and/or a dynamic power save (DPS) operation parameters field. Note that the dialog token field can be set by a non-AP MLD to a non-zero value chosen by the non-AP MLD. As shown in Figure 7, the UHR control field format can include a DUO mode subfield, a DPS mode subfield, and reserved field. The DUO mode subfield can be 1 bit. The DUO mode subfield can indicate whether/when/if an ICF-ICR mode is enabled or disabled for a wireless station. For example, if the DUO mode subfield is set to 0, the DUO mode subfield can indicate that ICF-ICR mode is disabled and if the DUO mode subfield is set to 1, the DUO mode subfield can indicate that ICF-ICR mode is enabled. Alternatively, if the DUO mode subfield is set to 1, the DUO mode subfield can indicate that ICF-ICR mode is disabled and if the DUO mode subfield is set to 0, the DUO mode subfield can indicate that ICF-ICR mode is enabled. The DPS mode subfield can be 1 bit. The DPS mode subfield can indicate whether/when/if DPS mode is disabled or enabled for a wireless station. Note that when the DUO mode subfield indicates that DUO mode is enabled, the DUO operation parameters field will be present in the UHR control field. For example, if the DPS mode subfield is set to 0, the DPS mode subfield can indicate that DPS mode is disabled and if the DPS subfield is set to 1, the DPS mode subfield can indicate that DPS mode is enabled. Alternatively, if the DPS mode subfield is set to 1, the DPS mode subfield can indicate that DPS mode is disabled and if the DPS subfield is set to 0, the DPS mode subfield can indicate that DPS mode is enabled. Note that when the DPS mode subfield indicates that DPS mode is enabled, the DPS operation parameters field will be present in the UHR control field.

Figure 8 illustrates an example of a DPS operation parameters field format, according to some embodiments. As shown, the DPS operation parameters field can include a link identifier (ID) bitmap field, a DPS parameter update control field, an ICF required field, a reserved field, a DPS padding delay field, and/or a DPS transition delay field. The link ID bitmap field can be 16 bits. The DPS parameter update control field can be 1 bit. The ICF required field can be 1 bit. The DPS padding delay field can be 0 or 8 bits. The DPS transition delay field can be 0 or 8 bits. The reserved field can be 6 bits. The link ID bitmap field can indicate one or more links for which DPS mode is enabled. The DPS parameter update control field can indicate whether an updated DPS padding delay and/or DPS transition delay values are present with respect to a transmitted value in a last transmitted UHR mode enablement notification frame. In other words, the DPS parameter update control field can indicate that a DPS padding delay field and/or a DPS transition delay field are present in the DPS operation parameters field. For example, if/when the DPS parameter update control field is set to a value of 1, then the DPS padding delay field and/or the DPS transition delay field are present in the DPS operation parameters field. In addition, if/when the DPS parameter update control field is set to a value of 1 and there is a non-zero value in the DPS padding delay subfield, then it is implied that the wireless station that has enabled DPS mode requires an intermediate FCS (I-FCS) in the ICF. The ICF required field can indicate whether or not the wireless station requires/needs an ICF and ICR exchange prior to any frame exchange initiated with the wireless station when operating in DPS mode or only for the wireless station to transition from low capability mode (LCM) to high capability mode (HCM). For example, if/when the ICR required field is set to a value of 0, an ICF and ICR exchange can be required for all frame exchanges whereas if/when the ICR required field is set to a value of 1, an ICF and ICR exchange can be required only for frame exchanges that use HCM parameters. As another example, if/when the ICR required field is set to a value of 1, an ICF and ICR exchange can be required for all frame exchanges whereas if/when the ICR required field is set to a value of 0, an ICF and ICR exchange can be required only for frame exchanges that use HCM parameters. The DPS padding delay field can indicate an updated value of a DPS padding delay. The updated value can range from 0 to 64 in a resolution of 4 microseconds. The DPS transition delay field can indicate an updated value of a DPS transition delay. The updated value can range from 0 to 64 in a resolution of 4 microseconds.

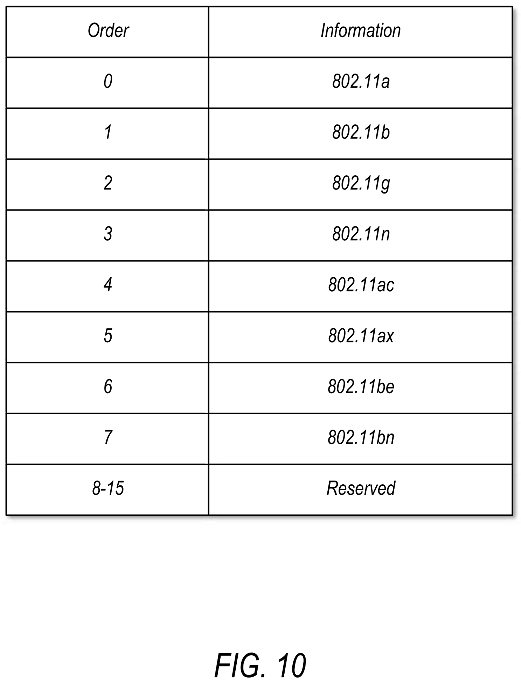

Figure 9 illustrates another example of a DPS operation parameters field format, according to some embodiments. As shown, the DPS operation parameters field can include a link identifier (ID) bitmap field, a DPS parameter update control field, an ICF required field, a maximum bandwidth (BW) in low capability (LC) mode field, a maximum number of spatial streams (Nss) in LC mode field, a maximum modulation and coding scheme (MCS) in LC mode field, a PPDU format in LC mode field, a reserved field, a DPS padding delay field, and/or a DPS transition delay field. The link ID bitmap field can be 16 bits. The DPS parameter update control field can be 1 bit. The ICF required field can be 1 bit. The maximum BW in LC mode field can be 3 bits. The maximum Nss in LC mode can be 3 bits. The maximum MCS in LC mode can be 5 bits. The PPDU format in LC mode can be 3 or 4 bits. The DPS padding delay field can be 0 or 8 bits. The DPS transition delay field can be 0 or 8 bits. The reserved field can be 0 or 7 bits. The link ID bitmap field can indicate one or more links for which DPS mode is enabled. The DPS parameter update control field can indicate whether an updated DPS padding delay and/or DPS transition delay values are present with respect to a transmitted value in a last transmitted UHR mode enablement notification frame. In other words, the DPS parameter update control field can indicate that a DPS padding delay field and/or a DPS transition delay field are present in the DPS operation parameters field. For example, if/when the DPS parameter update control field is set to a value of 1, then the DPS padding delay field and/or the DPS transition delay field are present in the DPS operation parameters field. In addition, if/when the DPS parameter update control field is set to a value of 1 and there is a non-zero value in the DPS padding delay subfield, then it is implied that the wireless station that has enabled DPS mode requires an intermediate FCS (I-FCS) in the ICF. The ICF required field can indicate whether or not the wireless station requires/needs an ICF and ICR exchange prior to any frame exchange initiated with the wireless station when operating in DPS mode or only for the wireless station to transition from low capability mode (LCM) to high capability mode (HCM). For example, if/when the ICR required field is set to a value of 0, an ICF and ICR exchange can be required for all frame exchanges whereas if/when the ICR required field is set to a value of 1, an ICF and ICR exchange can be required only for frame exchanges that use HCM parameters. As another example, if/when the ICR required field is set to a value of 1, an ICF and ICR exchange can be required for all frame exchanges whereas if/when the ICR required field is set to a value of 0, an ICF and ICR exchange can be required only for frame exchanges that use HCM parameters. The maximum BW field can indicate a maximum BW supported by the wireless station in LC mode. The maximum Nss field can indicate a maximum number of spatial streams supported by the wireless station in LC mode. The maximum MCS field can indicate a maximum MCS supported by the wireless station in LC mode. The PPDU format field can indicate a PPDU format for transmit and receive operations in LC mode as shown in Figure 10. For example, as shown in Figure 10, a value of 0 can indicate a PPDU format according to IEEE 802.11a, a value of 1 can indicate a PPDU format according to IEEE 802.11b, a value of 2 can indicate a PPDU format according to IEEE 802.11g, a value of 3 can indicate a PPDU format according to IEEE 802.11n, a value of 4 can indicate a PPDU format according to IEEE 802.11ac, a value of 5 can indicate a PPDU format according to IEEE 802.11ax, a value of 6 can indicate a PPDU format according to IEEE 802.11be, a value of 7 can indicate a PPDU format according to IEEE 802.11bn, and remaining values (e.g., 8-15 when the PPDU format filed is 4 bits) can be reserved. The reserved field can be The DPS padding delay field can indicate an updated value of a DPS padding delay. The updated value can range from 0 to 64 in a resolution of 4 microseconds. The DPS transition delay field can indicate an updated value of a DPS transition delay. The updated value can range from 0 to 64 in a resolution of 4 microseconds.

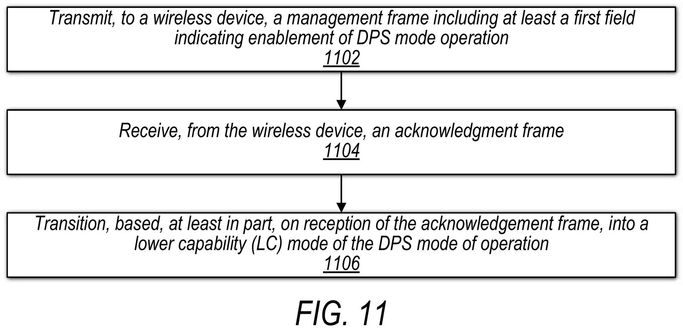

Figure 11 is a flowchart diagram illustrating an example method for dynamic power save (DPS) mode operation, e.g., such as an IEEE 802.11 based system, according to some embodiments. In various embodiments, some of the elements shown can be performed concurrently, in a different order than shown, can be substituted for by one or more other elements, or can be omitted. Additional elements can also be performed as desired.

Aspects of the elements of Figure 11 can be implemented by a wireless device, such as the AP 104 or STA 106 illustrated in and described with respect to Figures 1-4, or more generally in conjunction with any of the computer circuitry, systems, devices, elements, or components shown in the Figures, among others, as desired. For example, a processor (such as baseband processor 400 illustrated in and described with respect to Figure 4) and/or other hardware of such a device can be configured to cause the device to perform any combination of the illustrated elements and/or other elements.

Note that while at least some of the elements of Figure 11 are described in a manner relating to the use of communication techniques and/or features associated with IEEE 802.11 specification documents, such description is not intended to be limiting to the disclosure, and aspects of the elements of Figure 11 can be used in any suitable wireless communication system, as desired. As shown, the method can operate as follows.

At 1102, a wireless device and/or a baseband processor of a wireless device, such as wireless device 106, can transmit, to another wireless device, a management frame including at least a first field indicating enablement of DPS mode operation. In some instances, the management frame can further include a second field indicating enablement of a dynamic unavailability operation (DUO) mode. The second field can indicate whether an exchange of an initial control frame and initial response is required when operating in DUO mode.

In some instances, the other wireless device can be an access point (AP), a multilink device (MLD), e.g., such as an MLD AP and/or a non-AP MLD, and/or a peer wireless device.

In some instances, the management frame can further include a DPS operation parameters field. In some instances, the DPS operation parameters field can include at least one subfield indicating one or more links for which DPS mode operation is enabled. The one or more links can be indicated via a bitmap, e.g., a link bitmap. In some instances, the DPS operation parameters field can include at least one subfield indicating whether a value for a padding delay and a value for a transition delay are being advertised for a first time or updated via the management frame. For example, when the value for the padding delay and the value for the transition delay are being updated via the management frame, the DPS operation parameters field can include at least one subfield indicating the value for the padding delay (padding delay subfield) and at least one subfield indicating the value for the transition delay (transition delay subfield). In some instances, if/when such a parameter is set to a value of 1, then the padding delay field and/or the transition delay field are present. In addition, if/when such a parameter is set to a value of 1 and there is a non-zero value in the padding delay subfield, then it can be implied that DPS mode requires an intermediate frame check sum (I-FCS) in an initial control frame (ICF). In other words, when the value for the padding delay is non-zero, an I-FCS can be required to be included in an ICF received from the wireless device In some instances, the DPS operation parameters field can include at least one subfield indicating whether an exchange of an initial control frame (ICF) and initial response (ICR) is required for all frame exchanges or only frame exchanges using higher capability (HC) mode parameters of the DPS mode of operation. For example, if/when such a subfield is set to a value of 0, an ICF and ICR exchange can be required for all frame exchanges whereas if/when the subfield is set to a value of 1, an ICF and ICR exchange can be required only for frame exchanges that use HCM parameters. As another example, if/when such a subfield is set to a value of 1, an ICF and ICR exchange can be required for all frame exchanges whereas if/when the subfield is set to a value of 0, an ICF and ICR exchange can be required only for frame exchanges that use HCM parameters. In some instances, the DPS operation parameters field can include at least one subfield indicating a maximum bandwidth supported in the LC mode of the DPS mode of operation. In some instances, the DPS operation parameters field can include at least one subfield indicating a maximum number of spatial streams supported in the LC mode of the DPS mode of operation. In some instances, the DPS operation parameters field can include at least one subfield indicating a maximum modulation and coding scheme supported in the LC mode of the DPS mode of operation. In some instances, the DPS operation parameters field can include at least one subfield indicating a physical layer protocol date unit (PPDU) format supported for transmit and receive operations in the LC mode of the DPS mode of operation. The at least one subfield indicating the PPDU format can indicate whether a PPDU format according to the Institute of Electrical and Electronics Engineers (IEEE) 802.11a standard is support, a PPDU format according to the IEEE 802.11b standard is supported, a PPDU format according to the IEEE 802.11g standard is supported, a PPDU format according to the IEEE 802.11n standard is supported, a PPDU format according to the IEEE 802.11ac standard is supported, a PPDU format according to the IEEE 802.11ax standard is supported, a PPDU format according to the IEEE 802.11be standard is supported, or a PPDU format according to the IEEE 802.11bn standard is supported.

In some instances, the DPS operation parameters can include an indication of whether operation in the lower-capability (LC) mode is performed using a default LC capability configuration or using a parameterized LC capability configuration. For example, when operating in the default LC capability configuration, the wireless device can operate using predefined LC parameters, such as a default channel bandwidth, a default number of spatial streams, and/or a default physical layer protocol data unit (PPDU) format and data rates. As another example, when operating in the parameterized LC capability configuration, one or more LC capability parameters, including at least one of a bandwidth, a number of spatial streams, a modulation and coding scheme, and/or a PPDU format, can be determined based on corresponding values indicated in the DPS operation parameters field.

At 1104, the wireless device and/or baseband processor of the wireless device can receive, from the other wireless device, an acknowledgment frame.

At 1106, the wireless device and/or baseband processor of the wireless device can transition, based, at least in part, on reception of the acknowledgement frame, into a lower capability (LC) mode of the DPS mode of operation.

In some instances, the wireless device and/or baseband processor of the wireless device can receive, from the other wireless device, an ICF. The ICF, at least in some instances, can be based, at least in part, on the management frame. In addition, the wireless device and/or baseband processor of the wireless device can transition, based on receipt of the ICF, to a higher capability (HC) mode of the DPS mode of operation. Further, the wireless device and/or baseband processor of the wireless device can receive, from the other wireless device, a physical layer protocol data unit (PPDU) while in the HC mode. In some instances, the wireless device and/or baseband processor of the wireless device can transmit, to the other wireless device, an initial control response in the HC mode.

In some instances, the wireless device can transmit, to the other wireless device, a management frame including at least the first field, where the first field indicates disablement of DPS mode operation. In such instances, the wireless device can then return to non-DPS mode operation.

Thus, according to the method of Figure 11, it can be possible to enable and/or disable DPS mode operation via a management frame in a WLAN setting.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

In addition to the above-described exemplary embodiments, further embodiments of the present disclosure can be realized in any of various forms. For example, some embodiments can be realized as a computer-implemented method, a computer-readable memory medium, or a computer system. Other embodiments can be realized using one or more custom-designed hardware devices such as ASICs. Still other embodiments can be realized using one or more programmable hardware elements such as FPGAs.

In some embodiments, a non-transitory computer-readable memory medium can be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a device (e.g., an AP 104 or a STA 106) can be configured to include a processor (or a set of processors) and a memory medium, where the memory medium stores program instructions, where the processor is configured to read and execute the program instructions from the memory medium, where the program instructions are executable to implement any of the various method embodiments described herein (or, any combination of the method embodiments described herein, or, any subset of any of the method embodiments described herein, or, any combination of such subsets). The device can be realized in any of various forms.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A method for managing a dynamic power save, DPS, mode of operation, comprising:
transmitting (1102), to a wireless device (106), a management frame that includes a field indicating enablement or disablement of a DPS mode of operation and a mode-specific parameters field that includes DPS operation parameters for use in the DPS mode of operation;
receiving (1104), from the wireless device (106), an acknowledgment of the management frame; and
operating in a lower-capability mode based, at least in part on the acknowledgment and the DPS operation parameters.

2. The method of claim 1, further comprising:
receiving, from the wireless device (106) while in the lower-capability mode, an initial control frame generated according to the DPS operation parameters; and
transitioning to a higher-capability mode based, at least in part, on reception of the initial control frame.

3. The method of claim 2,
wherein the DPS operation parameters include a transition delay value indicating a duration for returning from the higher-capability mode to the lower-capability mode.

4. The method of claim 2, further comprising:
transmitting, to the wireless device (106), an initial control response in the higher-capability mode.

5. The method of claim 2, further comprising:
transitioning, after a timeout interval determined based on a transition delay value, from the higher-capability mode to the lower-capability mode.

6. The method of claim 2, further comprising:
transmitting, to the wireless device (106), a management frame indicating disablement of the DPS mode of operation; and
returning to non-DPS operation.

7. The method of claim 1,
wherein the DPS operation parameters include an indication of one or more links for which the DPS mode of operation is enabled.

8. The method of claim 1,
wherein the DPS operation parameters include an indication of whether updated parameter values are included in the management frame.

9. The method of claim 1,
wherein the DPS operation parameters include an indication of whether an exchange of an initial control frame and initial control response is required for all frame exchanges or only frame exchanges when operation in a higher-capability mode is intended.

10. The method of claim 1,
wherein the DPS operation parameters include a padding delay value for use in generating an initial control frame; and
wherein a non-zero padding delay value implies that the initial control frame includes an intermediate frame check sequence.

11. The method of claim 1,
wherein the DPS operation parameters include an indication of at least one capability supported in the lower-capability mode.

12. The method of claim 11,
wherein the at least one capability supported in the lower-capability mode includes at least one of a maximum bandwidth, a maximum number of spatial streams, a maximum modulation and coding scheme, or a supported physical-layer protocol data unit format.

13. The method of claim 1,
wherein the management frame further comprises a field indicating enablement or disablement of a dynamic unavailability operation, DUO, mode and a DUO-specific mode-specific parameters field.

14. A wireless device (106), comprising:
one or more antennas (235A, 235B);
one or more radios (230) operably coupled to the one or more antennas (235A, 235B); and
a baseband processor (232, 234, 236, 400) operably coupled to the one or more radios (230); and
wherein the baseband processor (232, 234, 236, 400) is configured to cause the wireless device (106) to perform a method according to any of claims 1 to 13.

15. A non-transitory computer readable memory medium (404) storing instructions executable by processing circuitry (402) to cause a wireless device (106) to perform a method according to any of claims 1 to 13.
